# FASCICULE DE BREVET EUROPEEN

(11) **EP 2 668 061 B1**
(45) Date de publication et mention de la délivrance du brevet: **20.09.2017**
(21) Numéro de dépôt: 11815485.5
(22) Date de dépôt: 20.12.2011
(51) Int. Cl.: B60L 11/18, H02J 7/00, G01R 31/36

(54) **DISPOSITIF DE CONTRÔLE DU RECHARGEMENT D'UNE BATTERIE ÉLECTRIQUE D'UN SYSTÈME, PAR ESTIMATION D'IMPÉDANCE ET/OU D'EFFET NON LINÉAIRE PARASITE(S) EN AMONT D'UN CHARGEUR**
STEUERUNG DER LADUNG EINE ELEKTRISCHE BATTERIE DURCH SCHÄTZUNG DER PARASITÄRIMPEDANZ
DEVICE FOR CONTROLLING THE CHARGING OF AN ELECTRICAL BATTERY OF A SYSTEM, BY ESTIMATING PARASITE IMPEDANCE AND/OR NON-LINEAR EFFECT UPSTREAM OF A CHARGER

(30) Priorité: 26.01.2011 FR 1150610
(43) Date de publication de la demande: 04.12.2013
(73) Titulaire: PSA Automobiles SA, 78300 Poissy (FR)
(72) Inventeur: MORAND, Nicolas, F-92400 Courbevoie (FR); COMBES, Emmanuel, F-91410 St Cyr sous Dourdan (FR); GROSHEITSCH, Ludovic, F-91190 Gif sur Yvette (FR)
(74) Mandataire: Jeannin, Laurent Jean-Pierre
(86) Numéro de dépôt international: PCT/FR2011/053112
(87) Numéro de publication internationale: WO 2012/101343

(56) Documents cités:
- US-A- 5 969 508
- US-B1- 6 479 968

## Description

L'invention concerne les systèmes qui comportent au moins une batterie électrique qui peut être rechargée à un point de recharge (public ou privé) offrant un courant alternatif, et plus précisément le contrôle du rechargement des batteries électriques de ces systèmes.

L'invention concerne notamment les systèmes tels que les véhicules, éventuellement de type automobile, et éventuellement de type hybride ou tout électrique, les bâtiments, les installations publiques et industrielles, l'aéronautique, l'électronique grand public, et le domaine ferroviaire.

On entend ici par "point de recharge public" une borne de recharge publique, et par "point de recharge privé" une prise de courant connectée à une portion d'un réseau d'alimentation électrique.

Un système, tel que défini ci-avant, comporte un chargeur qui, d'une première part, est destiné à être couplé à un point de recharge, généralement via un câble de connexion, d'une deuxième part, est couplé à sa batterie électrique, et, d'une troisième part, est agencé de manière à charger sa batterie électrique aussi efficacement que possible à partir du courant alternatif qui est fourni par le point de recharge auquel il est couplé. Ce chargement optimal se fait généralement en fonction de l'état de charge en cours et de la capacité de stockage en cours de la batterie électrique, et, bien entendu, de la puissance que le point de recharge peut fournir.

L'état de charge en cours et la capacité de stockage en cours de la batterie électrique peuvent être estimés assez précisément. Mais, si l'on connaît avec une assez bonne précision la puissance disponible au niveau du transformateur basse tension du réseau d'alimentation général qui alimente un point de recharge, il n'en va pas de même pour le courant alternatif qui parvient effectivement aux bornes d'un chargeur de batterie couplé à ce point de recharge. En effet, le courant alternatif qui est fourni par le réseau d'alimentation général peut être dégradé par la présence d'impédances parasites sur les lignes (composées généralement de câbles électriques, de connexions et de divers équipements) qui relient le transformateur basse tension au point de recharge et/ou dans le point de recharge et/ou dans le câble de connexion qui assure le couplage entre le chargeur et le point de recharge. On notera que de ces impédances parasites peu(ven)t résulter un effet résistif et/ou un effet capacitif.

En présence de telles impédances parasites, le chargeur détermine les paramètres de recharge de la batterie électrique associée (courant de recharge et donc temps de recharge) en fonction d'une puissance disponible et donc d'un courant alternatif maximal théorique qui diffère de celui qui est réellement disponible, ce qui peut entraîner une dégradation du rechargement. Cette dégradation peut se traduire par des chutes de tension et/ou des échauffements parfois importants, qui peuvent parfois endommager une prise de courant murale (en particulier lorsqu'elle est très ancienne), ou provoquer des accidents (ou incidents) électriques (en particulier lorsque l'installation électrique qui est placée entre le transformateur basse tension et le point de recharge est très ancienne et/ou que le câble de connexion n'est pas aux normes).

Il a certes été proposé, notamment dans le document brevet WO 2010/049775, d'utiliser des câbles de connexion équipés de dispositifs de protection destinés à éviter certaines surchauffes ou certaines fuites de courant. Mais, cette solution n'est valable que si l'on dispose d'un tel câble de connexion, ce qui est rarement le cas. En outre, cette solution ne permet pas de s'affranchir des impédances parasites qui sont situées en amont du câble de connexion (c'est-à-dire entre le transformateur basse tension et le point de recharge), et donc même en présence d'un câble de connexion à dispositif de protection le chargeur peut être alimenté avec une puissance maximale plus dégradée.

L'invention a donc pour but d'améliorer la situation grâce à une estimation de l'impédance parasite globale qui peut exister en amont d'un chargeur.

Elle propose notamment à cet effet un dispositif de contrôle, destiné à être associé à un chargeur de batterie(s) électrique(s) d'un système, ce chargeur comportant des bornes d'entrée destinées à être couplées, d'une part, à un point de recharge, qui est connecté à un réseau d'alimentation général délivrant une différence de tension alternative principale, et, d'autre part, à la batterie électrique via au moins des lignes.

Ce dispositif de contrôle se caractérise par le fait qu'il comprend:
- des moyens de mesure propres à être couplés à l'une au moins des lignes afin de mesurer au moins des première et seconde valeurs d'au moins une grandeur électrique qui concerne ces lignes, en présence respectivement de première et seconde consommations de courant différentes de l'ensemble composé du chargeur et de la batterie électrique, et
- des moyens de traitement agencés pour contraindre cet ensemble à effectuer les première et seconde consommations de courant, puis pour estimer une impédance parasite et/ou un effet non linéaire parasite existant entre les bornes d'entrée et le réseau d'alimentation général en fonction des première et seconde valeurs mesurées et des première et seconde consommations de courant, et pour déterminer une valeur de courant de recharge de la batterie électrique en fonction de cette impédance parasite estimée et/ou de l'effet non linéaire parasite, et de la différence de tension alternative principale.

Le dispositif de contrôle selon l'invention peut comporter d'autres caractéristiques qui peuvent être prises séparément ou en combinaison, et notamment :
- chaque grandeur électrique peut être choisie parmi (au moins) une différence de tension, un courant et un déphasage;
   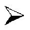 ses moyens de mesure peuvent être propres à être interconnectés aux lignes afin de mesurer des première et seconde valeurs représentatives de la différence de tension entre ces lignes, en présence respectivement de première et seconde consommations de courant différentes de l'ensemble composé du chargeur et de la batterie électrique;
- ses moyens de traitement peuvent être agencés pour contraindre la batterie électrique à effectuer une première consommation de courant négligeable, puis une seconde consommation de courant non négligeable;
   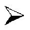 la première consommation de courant peut être sensiblement nulle;
- ses moyens de traitement peuvent être agencés pour déterminer une valeur de courant de recharge qui est propre à permettre un temps de recharge minimal (dans de bonnes conditions de fonctionnement du système électrique alimentant le chargeur);
- ses moyens de traitement peuvent être agencés pour adapter la valeur de courant de recharge pendant le rechargement de la batterie électrique;
- ses moyens de traitement peuvent être agencés pour contraindre l'ensemble composé du chargeur et de la batterie électrique à effectuer les première et seconde consommations de courant au moins avant que ne commence un rechargement;
- ses moyens de traitement peuvent être agencés pour réduire le courant de recharge ou interdire le rechargement, lorsque l'impédance parasite estimée est en dehors d'une plage de valeurs prédéfinie correspondant à des conditions minimales de fonctionnement des équipements électriques qui alimentent le chargeur.

L'invention propose également un chargeur de batterie(s) électrique(s) pour un système, ce chargeur comprenant, d'une part, des bornes d'entrée destinées à être couplées à un point de recharge, qui est connecté à un réseau d'alimentation général délivrant une différence de tension alternative principale, et à la batterie électrique via des lignes, et, d'autre part, un dispositif de contrôle du type de celui présenté ci-avant.

L'invention propose également un système comportant au moins une batterie électrique rechargeable à un point de recharge et un chargeur du type de celui présenté ci-avant.

Un tel système peut, par exemple, équiper ou constituer un véhicule, éventuellement de type automobile, et éventuellement de type hybride ou de type tout électrique.

D'autres caractéristiques et avantages de l'invention apparaîtront à l'examen de la description détaillée ci-après, et des dessins annexés, sur lesquels :
- la figure 1 illustre schématiquement et fonctionnellement un véhicule comprenant un chargeur, pourvu d'un exemple de réalisation d'un dispositif de contrôle selon l'invention et couplé, via un câble de connexion, à une prise de courant murale, constituant un point de recharge connecté à un réseau d'alimentation général, et
- la figure 2 illustre schématiquement et fonctionnellement un exemple de réalisation de moyens de mesure d'un dispositif de contrôle selon l'invention.

Les dessins annexés pourront non seulement servir à compléter l'invention, mais aussi contribuer à sa définition, le cas échéant.

L'invention a pour but d'offrir un dispositif de contrôle (D), et un chargeur (CH) associé, destinés à équiper un système (V) comportant au moins une batterie électrique rechargeable (BA) afin de permettre un rechargement efficace de cette dernière (BA), y compris lorsque des impédances parasites existent en amont du chargeur (CH).

Dans ce qui suit, on considère, à titre d'exemple non limitatif, que les systèmes (V) sont des véhicules de type automobile. Il s'agit par exemple de voitures de type tout électrique ou hybride. Mais, l'invention n'est pas limitée à ce type de système. Elle concerne en effet tout type de système comportant au moins une batterie électrique (BA) qui peut être rechargée auprès d'un point de recharge (PC) public (borne de recharge publique) ou privé (prise de courant murale connectée à une portion d'un réseau d'alimentation électrique (RA)). Ainsi, elle concerne également les bâtiments, les installations publiques et industrielles, l'aéronautique, l'électronique grand public, et le domaine ferroviaire.

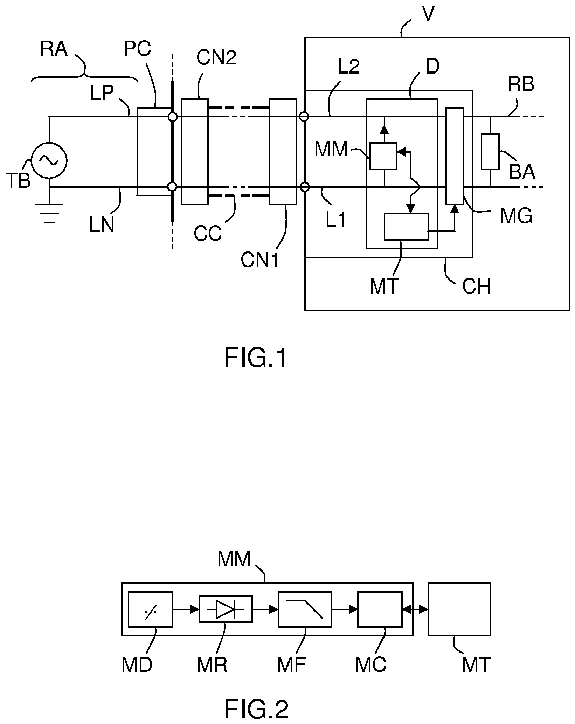

On a schématiquement représenté sur la figure 1 un système V (ici un véhicule) comprenant une batterie (électrique rechargeable) BA couplée, d'une part, à un réseau d'alimentation embarqué (ou réseau de bord) RB, et, d'autre part, à un chargeur CH qui est lui même couplé à un point de recharge PC via un câble de connexion CC.

Dans l'exemple non limitatif illustré sur la figure 1, le point de recharge PC est une prise de courant murale qui est connectée à une portion d'un réseau d'alimentation général (ou "secteur") RA. Mais, dans une variante, le point de recharge pourrait être une borne de recharge publique connectée à une portion d'un réseau d'alimentation général.

Dans ce qui suit, on considère, à titre d'exemple non limitatif, que le réseau d'alimentation général RA est de type monophasé. Mais, il pourrait être de type triphasé.

Lorsque le réseau d'alimentation général RA est de type monophasé, il comprend, comme illustré, une ligne de neutre LN et une ligne de phase LP. On notera qu'il comprend également une ligne de terre qui n'a pas été représentée afin de ne pas trop surcharger la figure 1. On notera que si le réseau d'alimentation général RA était de type triphasé il comporterait trois lignes de phase.

Le réseau d'alimentation général RA comprend également un transformateur basse tension TB qui fournit une différence de tension alternative principale V0 entre ses bornes, laquelle est destinée à alimenter la prise (de courant) murale PC, via la portion de réseau à laquelle elle est connectée et donc via les lignes de phase LP et de neutre LN.

Il est important de noter que l'invention concerne n'importe quel type de régime de neutre assuré par la portion de réseau à laquelle est connectée la prise murale PC, et notamment ceux de type TT ("Terre-Terre"), IT ("Isolé-Terre") ou TN ("Terre-Neutre") ainsi que toutes leurs variantes.

La prise murale PC comprend des bornes matérialisées par des cercles blancs et qui sont respectivement connectées aux lignes de neutre LN et de phase LP (ainsi qu'à la ligne de terre non représentée).

Le câble de connexion CC, qui est utilisé pour coupler le chargeur CH du véhicule V à la prise murale PC, comprend deux connecteurs CN1 et CN2 interconnectés par des lignes (ou câbles électriques) destinées à être couplées aux lignes de neutre LN et de phase LP (ainsi qu'à la ligne de terre non représentée) qui arrivent à la prise murale PC. Ici le premier connecteur CN1 est couplé au chargeur CH du véhicule V, tandis que le second connecteur CN2 est couplé à la prise murale PC. On notera que dans des variantes, les connecteurs CN1 et CN2 peuvent comporter d'autres voies, par exemple dans le but de faire circuler divers signaux.

Le chargeur CH comprend un connecteur muni de bornes d'entrée, matérialisées par des cercles blancs et ici connectées au premier connecteur CN1 du câble de connexion CC. Le chargeur CH comprend également des première L1 et deuxième L2 lignes (ou câbles électriques) qui sont connectées, d'une part, aux bornes d'entrée afin de pouvoir être couplées respectivement aux lignes de neutre LN et de phase LP qui arrivent à la prise murale PC, ou inversement, et, d'autre part, à des moyens de gestion MG qui sont eux mêmes couplés à la batterie électrique BA (afin de l'alimenter). On notera que pour simplifier la figure 1 on n'a pas représenté la troisième ligne du chargeur CH, qui est destinée à être couplée à la ligne de terre de la prise murale PC.

Les moyens de gestion MG désignent ici tous les composants électriques ou électroniques qui constituent des circuits du chargeur CH destinés à transformer la différence de tension entre les première L1 et deuxième L2 lignes en tension(s) de rechargement de la batterie électrique BA.

L'invention propose d'associer un dispositif de contrôle D au chargeur CH. On entend ici par "associer" le fait d'être couplé au chargeur CH et de faire partie intégrante de ce dernier (CH), totalement (comme illustré non limitativement sur la figure 1), partiellement ou pas du tout.

Comme illustré non limitativement sur la figure 1, un dispositif de contrôle D, selon l'invention, comprend au moins des moyens de mesure MM et des moyens de traitement MT.

Les moyens de mesure MM sont destinés à être couplés à l'une au moins des lignes L1 et L2 afin de mesurer des première V1 et seconde V2 valeurs d'au moins une grandeur électrique qui concerne ces lignes L1 et L2, lorsque l'ensemble composé du chargeur CH et de la batterie électrique BA est contraint (par les moyens de traitement MT) d'effectuer respectivement des première et seconde consommations de courant différentes.

Plusieurs grandeurs physiques peuvent être envisagées, et notamment la différence de tension entre les première L1 et seconde L2 lignes, le courant qui circule dans le chargeur CH, et un déphasage.

Dans l'exemple non limitatif illustré sur la figure 1, les moyens de mesure MM sont interconnectés aux première L1 et seconde L2 lignes afin de mesurer des première V1 et seconde V2 valeurs qui sont représentatives de la différence de tension entre ces première L1 et seconde L2 lignes, en présence respectivement de première et seconde consommations de courant différentes de l'ensemble composé du chargeur CH (et plus précisément de ses moyens de gestion MG) et de la batterie électrique BA. Par conséquent, les moyens de mesure MM ne sont ici chargés que d'effectuer des mesures de (différences de) tension. Mais, cela n'est pas obligatoire. En effet, ils pourraient être chargés d'effectuer des mesures de courant et/ou des mesures de déphasage, ou bien des mesures de (différences de) tension et des mesures de déphasage (dans ce cas les moyens de mesure MM doivent être connectés aux première L1 et seconde L2 lignes).

Comme illustré non limitativement sur la figure 2, lorsque les moyens de mesure MM sont destinés à effectuer des mesures de différences de tension, ils peuvent comprendre:
- des moyens de division MD de type analogique et agencés pour diviser chaque valeur (V1 ou V2) de différence de tension, mesurée entre les première L1 et seconde L2 lignes, par une constante choisie (par exemple égale à 250), afin de délivrer un premier signal intermédiaire analogique, situé par exemple dans la gamme 0 V à 1 V en valeur efficace.
- des moyens de redressement MR de type analogique et agencés pour redresser le premier signal intermédiaire analogique afin de délivrer un deuxième signal intermédiaire analogique qui ne comprend que des valeurs supérieures ou égales à zéro,
- des moyens de filtrage MF de type analogique et agencés pour appliquer un filtrage passe-bas au deuxième signal intermédiaire analogique afin de délivrer un troisième signal intermédiaire analogique proche du continu et dont la valeur est supérieure ou égale à un seuil, et
- des moyens de conversion MC agencés pour convertir le troisième signal intermédiaire analogique afin de délivrer un signal de sortie numérique, représentatif de chaque valeur (V1 ou V2) de différence de tension mesurée.

Bien entendu d'autres modes de réalisation des moyens de mesure MM peuvent être envisagés, qu'ils soient de type purement analogique ou de type analogique-numérique. En particulier l'homme de l'art saura choisir des moyens de mesure adaptés à chaque grandeur électrique devant être mesurée.

Les moyens de traitement MT, du dispositif D, sont notamment agencés pour contraindre l'ensemble composé du chargeur CH et de la batterie électrique BA à effectuer au moins les première et seconde consommations de courant.

Comme illustré non limitativement sur la figure 1, les moyens de gestion MG du chargeur CH sont couplés aux moyens de traitement MT, de sorte que ces derniers (MT) puissent leur imposer les contraintes de rechargement qu'ils ont déterminées. On comprendra en effet que ce sont les contraintes de rechargement imposées aux moyens de gestion MG qui vont contraindre l'ensemble composé du chargeur CH et de la batterie électrique BA à effectuer au moins les première et seconde consommations de courant.

Par exemple, les moyens de traitement MT peuvent être agencés pour contraindre les moyens de gestion MG et la batterie électrique BA à effectuer une première consommation de courant qui est négligeable (typiquement sensiblement nulle), ce qui est équivalent à une résistance de charge quasiment infinie, puis une seconde consommation de courant qui est non négligeable (bien que pas trop élevée), ce qui est équivalent à une résistance de charge relativement faible. On notera que pour ce faire les moyens de traitement MT peuvent être agencés pour contraindre la batterie électrique BA à augmenter progressivement sa consommation de courant (en la soumettant à une espèce de "rampe" croissante partant de la valeur nulle (ou quasi nulle)). Dans ce cas, les moyens de mesure MM mesurent au moins les première V1 et seconde V2 valeurs de chaque grandeur électrique choisie à des instants qui sont décalés dans le temps d'une durée prédéfinie, fonction des caractéristiques de la rampe utilisée. Dans des variantes, un nombre de mesures supérieur à deux peut être effectué, notamment dans le but d'augmenter la précision de l'optimisation du fonctionnement des moyens de gestion MG.

Les moyens de traitement MT sont également agencés, lorsqu'ils ont reçu les première V1 et seconde V2 valeurs (ici des différences de tension) des moyens de mesure MM, pour estimer l'impédance parasite (globale) Zp et/ou un effet non linéaire parasite, qui existe entre les bornes d'entrée du chargeur CH et le réseau d'alimentation général RA (et plus précisément le transformateur basse tension TB qui alimente la prise murale PC concernée), en fonction de ces première V1 et seconde V2 valeurs et des première et seconde consommations de courant (en vigueur au moment des deux mesures de valeur).

On entend ici par "effet non linéaire parasite" toute variation non linéaire non désirée présentée par une grandeur électrique mesurée. Il pourra par exemple et non limitativement s'agir d'un comportement qui varie selon que l'on effectue une mesure pendant une alternance positive ou une alternance négative (cela peut résulter notamment d'une diode défaillante ou d'un faux contact (par exemple dû à un charbonnage local)).

Dans ce qui suit, on ne considère que le cas où l'on estime l'impédance parasite (globale) Zp. Mais, on comprendra que l'invention permet également d'estimer une impédance parasite globale et un effet non linéaire parasite ou bien seulement un effet non linéaire parasite.

L'estimation précitée peut par exemple se faire comme indiqué ci-après.

On considère que les moyens de gestion MG sont montés en série dans un circuit électrique dans lequel circule un courant alternatif I de valeur inconnue et présentant une impédance parasite (globale) Zp également montée en série. On comprendra que ce circuit électrique (équivalent) est ici constitué du transformateur basse tension TB, des lignes de neutre LN et de phase LP, de divers équipements présents dans le réseau (tels que des interconnexions et des équipements de protection contre les surcharges), de la prise murale PC, du câble de connexion CC et des première L1 et seconde L2 lignes du chargeur CH.

Si l'on considère que la première consommation de courant imposée à la batterie électrique BA est sensiblement nulle, alors la première valeur Zch1 de l'impédance de charge de la batterie électrique BA est quasiment infinie et donc la première valeur V1 est sensiblement égale à la différence de tension principale V0 entre les lignes de neutre LN et de phase LP.

Si l'on considère que la seconde consommation de courant imposée à la batterie électrique BA est non négligeable, alors la seconde valeur Zch2 de l'impédance de charge de la batterie électrique BA est relativement faible (et connue) et donc le courant alternatif I est donné par la première formule I = V0 / (Zp + Zch2), laquelle est également donnée par la seconde formule I = (V0 - V2) / Zp.

On considère par ailleurs ici que la différence de tension principale V0 est connue et constante entre les deux mesures des première V1 et seconde V2 valeurs. Par conséquent, si l'on remplace V0 par V1 dans la seconde formule, on obtient la troisième formule Zp = (V1 - V2) / I, puis, si l'on remplace dans cette troisième formule le courant alternatif I par sa définition donnée dans la première formule, on obtient la quatrième formule Zp = Zch2 * ((V1 - V2) / V2).

On notera que d'autres méthodes d'estimation de l'impédance parasite (globale) Zp, connues de l'homme de l'art, peuvent être envisagées à partir des mesures de première V1 et seconde V2 valeurs. Par ailleurs, certaines de ces méthodes ainsi que celle décrite ci-avant, peuvent ne pas utiliser une première consommation de courant sensiblement nulle. Cela simplifie en effet les calculs, mais, ce qui est important c'est que les première et seconde consommations de courant soient suffisamment différentes entre elles, pour ne pas être proches des erreurs de mesure.

Enfin, les moyens de traitement MT sont également agencés pour déterminer une valeur de courant, de préférence maximale, de recharge de la batterie électrique BA en fonction de l'impédance parasite Zp qu'ils ont estimée et de la différence de tension alternative principale V0 (connue et fournie par le réseau d'alimentation général RA aux bornes de son transformateur basse tension TB qui alimente la prise murale PC concernée).

Il est rappelé que les paramètres de recharge de la batterie électrique BA, que sont notamment le temps de recharge et le courant de recharge (généralement maximal (ou optimal)), peuvent être déterminés en fonction de l'état de charge en cours et de la capacité de recharge en cours de la batterie électrique BA, lesquels peuvent être estimés notamment à partir de la température de fonctionnement de la batterie électrique BA, du courant circulant dans la batterie électrique BA, de la (différence de tension) aux bornes de la batterie électrique BA, ainsi que des caractéristiques de la batterie électrique BA.

De préférence, les moyens de traitement MT sont agencés pour déterminer une valeur de courant de recharge (de préférence maximal (ou optimal)) qui est propre à permettre un temps de recharge minimal de la batterie électrique BA.

On notera que les moyens de traitement MT peuvent être éventuellement agencés pour adapter, une ou plusieurs fois, la valeur du courant de recharge, initialement déterminée en fonction de l'impédance parasite Zp estimée et de la différence de tension alternative principale V0, pendant la phase de rechargement de la batterie électrique BA.

On notera également que les moyens de traitement MT peuvent être agencés pour contraindre les moyens de gestion MG et la batterie électrique BA à effectuer les première et seconde consommations de courant au début d'un rechargement. Mais, cela n'est pas obligatoire. En effet, ils peuvent être configurés pour imposer ces contraintes à au moins un instant intermédiaire de la phase de rechargement, ou bien avant que ne commence un rechargement et à un ou plusieurs instants intermédiaires de la phase de rechargement.

On notera également que les moyens de traitement MT peuvent être agencés pour estimer une valeur moyenne de l'impédance parasite (globale) Zp, avant de déterminer une valeur de courant de recharge pour la batterie électrique BA. Pour ce faire, ils doivent contraindre les moyens de mesure MM à effectuer au moins deux séries de mesures de première V1 et seconde V2 valeurs (ici des différences de tension).

On notera également que les moyens de traitement MT peuvent être agencés pour déterminer un courant de recharge en présence d'un circuit électrique triphasé. Dans ce cas, ils peuvent par exemple effectuer des calculs à partir de mesures de valeurs de grandeur(s) électrique(s) entre la ligne de neutre et une ou plusieurs des trois lignes de phase.

On notera également que les moyens de traitement MT peuvent être agencés pour réduire sensiblement la valeur maximale du courant de recharge, voire interdire le rechargement, lorsqu'ils détectent que l'impédance parasite Zp estimée est en dehors d'une plage de valeurs prédéfinie et donc qu'il existe au moins un défaut dans le circuit électrique de recharge (a priori en amont du chargeur CH).

On notera également que les moyens de traitement MT peuvent être implantés dans le chargeur CH, comme illustré non limitativement sur la figure 1. Mais, cela n'est pas obligatoire. En effet, ils pourraient être implantés dans un autre équipement ou élément du véhicule V, et notamment dans un calculateur. Par conséquent, les moyens de traitement MT peuvent être agencés sous la forme d'une combinaison de modules logiciels et de circuits électroniques (ils peuvent ainsi constituer un circuit logique programmable, comme par exemple un FPGA ("Field Programmable Gate Array") ou un ASIC ("Application-Specific Integrated Circuit"), par exemple), ou bien sous la forme de circuits électroniques, ou encore sous la forme de modules logiciels (par exemple implantés dans un calculateur du véhicule V).

L'invention ne se limite pas aux modes de réalisation de dispositif de contrôle, de chargeur et de système décrits ci-avant, seulement à titre d'exemple, mais elle englobe toutes les variantes que pourra envisager l'homme de l'art dans le cadre des revendications ci-après.

## Revendications

1. Dispositif de contrôle (D) pour un chargeur (CH) de batterie(s) électrique(s) (BA) d'un système (V), ayant des bornes d'entrée destinées à être couplées à un point de recharge (PC), connecté à un réseau d'alimentation général (RA) délivrant une différence de tension alternative principale, et à ladite batterie électrique (BA) via au moins des lignes (L1, L2), **caractérisé en ce qu'**il comprend i) des moyens de mesure (MM) propres à être couplés à l'une au moins desdites lignes (L1, L2) afin de mesurer au moins des première et seconde valeurs d'au moins une différence de tension qui concerne ces lignes (L1, L2), en présence respectivement de première et seconde consommations de courant différentes d'un ensemble composé dudit chargeur (CH) et de ladite batterie électrique (BA), et ii) des moyens de traitement (MT) agencés pour contraindre ledit ensemble (CH, BA) à effectuer lesdites première et seconde consommations de courant, puis pour estimer une impédance parasite existant entre lesdites bornes d'entrée et ledit réseau d'alimentation général (RA) en fonction desdites première et seconde valeurs et desdites première et seconde consommations de courant, et pour déterminer une valeur de courant de recharge de ladite batterie électrique (BA) en fonction de ladite impédance parasite estimée, et de ladite différence de tension alternative principale.

2. Dispositif selon la revendication 1, **caractérisé en ce que** lesdits moyens de mesure (MM) sont propres à être interconnectés auxdites lignes (L1, L2) afin de mesurer des première et seconde valeurs représentatives de la différence de tension entre ces lignes (L1, L2), en présence respectivement de première et seconde consommations de courant différentes ledit ensemble composé dudit chargeur (CH) et de ladite batterie électrique (BA).

3. Dispositif selon l'une des revendications 1 à 2, **caractérisé en ce que** lesdits moyens de traitement (MT) sont agencés pour contraindre ledit ensemble composé dudit chargeur (CH) et de ladite batterie électrique (BA) à effectuer une première consommation de courant négligeable, équivalente à une résistance de charge quasiment infinie, puis une seconde consommation de courant non négligeable, équivalente à une résistance de charge relativement faible.

4. Dispositif selon la revendication 3, **caractérisé en ce que** ladite première consommation de courant est sensiblement nulle.

5. Dispositif selon l'une des revendications 1 à 4, **caractérisé en ce que** les moyens de traitement (MT) sont également agencés pour déterminer une valeur de courant, de préférence maximale, de recharge de la batterie électrique (BA) en fonction de l'impédance parasite (Zp) qu'ils ont estimée.

6. Dispositif selon l'une des revendications 1 à 5, **caractérisé en ce que** lesdits moyens de traitement (MT) sont agencés pour contraindre ledit ensemble composé dudit chargeur (CH) et de ladite batterie électrique (BA) à effectuer lesdites première et seconde consommations de courant au moins avant que ne commence un rechargement.

7. Dispositif selon l'une des revendications 1 à 6, **caractérisé en ce que** lesdits moyens de traitement (MT) sont agencés pour réduire le courant de recharge ou interdire le rechargement, lorsque ladite impédance parasite estimée est en dehors d'une plage de valeurs prédéfinie correspondant à des conditions minimales de fonctionnement d'équipements électriques qui alimentent ledit chargeur (CH).

8. Chargeur (CH) de batterie(s) électrique(s) (BA) d'un système (V), ledit chargeur (CH) ayant des bornes d'entrée destinées à être couplées à un point de recharge (PC), connecté à un réseau d'alimentation général (RA) délivrant une différence de tension alternative principale, et à ladite batterie électrique (BA) via des lignes (L1, L2), **caractérisé en ce qu'**il comprend un dispositif de contrôle (D) selon l'une des revendications précédentes.

9. Système (V) comportant au moins une batterie électrique (BA) rechargeable à un point de recharge (PC), **caractérisé en ce qu'**il comprend un chargeur (CH) selon la revendication 8.

10. Système selon la revendication 9, **caractérisé en ce qu'**il constitue un véhicule.

11. Système selon la revendication 10, **caractérisé en ce qu'**il constitue un véhicule automobile de type hybride ou de type tout électrique.

## Patentansprüche

1. Steuervorrichtung (D) für ein Ladegerät (CH) elektrischer Batterie(n) (BA) eines Systems (V), das Eingangsklemmen hat, die dazu bestimmt sind, mit einer Aufladestelle (PC) gekoppelt zu werden, die an ein allgemeines Stromnetz (RA) angeschlossen ist, das eine Hauptwechselspannungsdifferenz liefert, und mit der elektrischen Batterie (BA) über mindestens Leitungen (L1, L2), **dadurch gekennzeichnet, dass** sie i) Messmittel (MM) umfasst, die geeignet sind, um mit mindestens einer der Leitungen (L1, L2) gekoppelt zu sein, um mindestens einen ersten und einen zweiten Wert mindestens einer Spannungsdifferenz, die die Leitungen (L1, L2) betrifft, in Gegenwart jeweils eines ersten und eines zweiten unterschiedlichen Stromverbrauchs einer Einheit (CH), die aus dem Ladegerät und der elektrischen Batterie (BA) besteht, zu messen, und ii) Verarbeitungsmittel (MT), die eingerichtet sind, um die Einheit (CH, BA) zu zwingen, den ersten und den zweiten Stromverbrauch auszuführen, dann, um eine parasitäre Impedanz, die zwischen den Eingangsklemmen und dem allgemeinen Stromnetz (RA) existiert, in Abhängigkeit von dem ersten und zweiten Wert des ersten und zweiten Stromverbrauch zu schätzen, und, um einen Aufladestromwert der elektrischen Batterie (BA) in Abhängigkeit von der geschätzten parasitären Impedanz und der Hauptwechselspannungsdifferenz zu bestimmen.

2. Vorrichtung nach Anspruch 1, **dadurch gekennzeichnet, dass** die Messmittel (MM) geeignet sind, an den Leitungen (L1, L2) zusammengeschaltet zu sein, um einen ersten und einen zweiten Wert, die für die Spannungsdifferenz zwischen diesen Leitungen (L1, L2) repräsentativ ist, jeweils in Gegenwart eines ersten und zweiten unterschiedlichen Stromverbrauchs der Einheit, die aus dem Ladegerät (CH) und der elektrischen Batterie (BA) besteht, zu messen.

3. Vorrichtung nach einem der Ansprüche 1 bis 2, **dadurch gekennzeichnet, dass** die Verarbeitungsmittel (MT) eingerichtet sind, um die Einheit, die aus dem Ladegerät (CH) und der elektrischen Batterie (BA) besteht, zu zwingen, einen ersten vernachlässigbaren Stromverbrauch, der gleich einem quasi unendlichen Ladewiderstand ist, dann einen zweiten nicht vernachlässigbaren Stromverbrauch, der gleich einem relativ schwachen Ladewiderstand ist, auszuführen.

4. Vorrichtung nach Anspruch 3, **dadurch gekennzeichnet, dass** der erste Stromverbrauch im Wesentlichen null ist.

5. Vorrichtung nach einem der Ansprüche 1 bis 4, **dadurch gekennzeichnet, dass** die Verarbeitungsmittel (MT) ebenfalls eingerichtet sind, um einen Aufladestromwert, der bevorzugt maximal ist, der elektrischen Batterie (BA) in Abhängigkeit von der parasitären Impedanz (Zp), die sie geschätzt haben, zu bestimmen.

6. Vorrichtung nach einem der Ansprüche 1 bis 5, **dadurch gekennzeichnet, dass** die Verarbeitungsmittel (MT) eingerichtet sind, um die Einheit, die aus dem Ladegerät (CH) und der elektrischen Batterie (BA) besteht, zu zwingen, den ersten und den zweiten Stromverbrauch mindestens vor dem Beginnen eines Aufladens auszuführen.

7. Vorrichtung nach einem der Ansprüche 1 bis 6, **dadurch gekennzeichnet, dass** die Verarbeitungsmittel (MT) eingerichtet sind, um den Aufladestrom zu verringern oder das Aufladen zu verbieten, wenn die geschätzte parasitäre Impedanz außerhalb eines vorbestimmten Bereichs von Werten liegt, der Mindestbetriebsbedingungen elektrischer Ausstattungen, die das Ladegerät (CH) versorgen, entspricht.

8. Ladegerät (CH) elektrischer Batterie(n) (BA) eines Systems (V), wobei das Ladegerät (CH) Eingangsklemmen hat, die dazu bestimmt sind, mit einer Aufladestelle (PC) gekoppelt zu sein, die an ein allgemeines Stromnetz (RA) angeschlossen ist, die eine Hauptwechselspannungsdifferenz liefert, und an die elektrische Batterie (BA) über Leitungen (L1, L2, **dadurch gekennzeichnet, dass** es eine Steuervorrichtung (D) nach einem der vorhergehenden Ansprüche umfasst.

9. System (V), das mindestens eine elektrische Batterie (BA) umfasst, die an einer Aufladestelle (PC) aufladbar ist, **dadurch gekennzeichnet, dass** es ein Ladegerät (CH) nach Anspruch 8 umfasst.

10. System nach Anspruch 9, **dadurch gekennzeichnet, dass** es ein Fahrzeug bildet.

11. System nach Anspruch 10, **dadurch gekennzeichnet, dass** es ein Kraftfahrzeug des hybriden Typs oder des vollelektrischen Typs bildet.

## Claims

1. A control device (D) for a charger (CH) of electrical battery/batteries (BA) of a system (V), having input terminals intended to be coupled to a charging point (PC), connected to a general supply network (RA) providing a main alternating voltage differential, and to said electrical battery (BA) via at least lines (L1, L2), **characterized in that** it includes i) measuring means (MM) suitable to be coupled to at least one of said lines (L1, L2) so as to measure at least first and second values of at least one voltage differential which concerns these lines (L1, L2), in the presence respectively of first and second different current consumptions of a set composed of said charger (CH) and of said electrical battery (BA), and ii) processing means (MT) arranged to force said set (CH, BA) to carry out said first and second current consumptions, then to estimate a parasite impedance existing between said input terminals and said general supply network (RA) as a function of said first and second values and said first and second current consumptions, and to determine a value of the charging current of said electrical battery (BA) as a function of said estimated parasite impedance, and of said main alternating voltage differential.

2. The device according to claim 1, **characterized in that** said measuring means (MM) are suitable to be interconnected to said lines (L1, L2) so as to measure first and second representative values of the voltage differential between these lines (L1, L2), in the presence respectively of first and second different current consumptions, said set composed of said charger (CH) and of said electrical battery (BA).

3. The device according to one of claims 1 to 2, **characterized in that** said processing means (MT) are arranged so as to force said set composed of said charger (CH) and of said electrical battery (BA) to carry out a first negligible current consumption, equivalent to an almost infinite load resistance, then a second non-negligible current consumption, equivalent to a relatively low load resistance.

4. The device according to claim 3, **characterized in that** said first current consumption is substantially zero.

5. The device according to one of claims 1 to 4, **characterized in that** the processing means (MT) are also arranged to determine a preferably maximum current value for charging the electrical battery (BA) as a function of the parasite impedance (Zp) which they have estimated.

6. The device according to one of claims 1 to 5, **characterized in that** said processing means (MT) are arranged so as to force said set composed of said charger (CH) and of said electrical battery (BA) to carry out said first and second current consumptions at least before a charging begins.

7. The device according to one of claims 1 to 6, **characterized in that** said processing means (MT) are arranged so as to reduce the charging current or to prohibit the charging, when said estimated parasite impedance is outside a predefined range of values corresponding to minimum operating conditions of electrical equipment which supply said charger (CH).

8. A charger (CH) of electrical battery/batteries (BA) of a system (V), said charger (CH) having input terminals intended to be coupled to a charging point (PC), connected to a general supply network (RA) providing a main alternating voltage differential, and to said electrical battery (BA) via lines (L1, L2), **characterized in that** it includes a control device (D) according to one of the preceding claims.

9. A system (V) comprising at least one electrical battery (BA) which is chargeable at a charging point (PC), **characterized in that** it includes a charger (CH) according to claim 8.

10. The system according to claim 9, **characterized in that** it constitutes a vehicle.

11. The system according to claim 10, **characterized in that** it constitutes a motor vehicle of the hybrid type or of the entirely electric type.
